# EUROPEAN PATENT SPECIFICATION

(11) **EP 4 554 803 B1**
(45) Date of publication and mention of the grant of the patent: **24.06.2026**
(21) Application number: 23741360.4
(22) Date of filing: 10.07.2023
(51) Int. Cl.: B60H 1/00

(54) **VEHICLE AIR CONDITIONER**
FAHRZEUGKLIMAANLAGE
CLIMATISEUR DE VÉHICULE

(30) Priority: 12.07.2022 JP 2022111529
(43) Date of publication of application: 21.05.2025
(73) Proprietor: Valeo Electrification, 95892 Cergy Pontoise (FR)
(72) Inventor: OBATA, Yasunori, kumagaya-shi Saitama-ken Kumagaya-shi, 360-0193 (JP); MITSUMOTO, Takaya, kumagaya-shi Saitama-ken Kumagaya-shi, 360-0193 (JP)
(74) Representative: Valeo Powertrain Systems
(86) International application number: PCT/EP2023/069079
(87) International publication number: WO 2024/013115

(56) References cited:
- WO-A1-2021/038154
- CA-A1- 2 883 493
- DE-A1- 102006 022 088
- US-A1- 2018 134 113

## Description

### [Technical Field]

The present invention relates to a technique for improving a vehicle air conditioner.

### [Background Art]

As a vehicle air conditioner, there is a known type in which a ratio of air flowing toward a warm air flow path to air flowing toward a cold air flow path is adjusted by a sliding mix door (see, for example, JP2021-0627254).

The vehicle air conditioner known from JP2021-062725A includes a cooler that is provided in an air flow path in a case and cools air, and a heater that is provided downstream of the cooler and heats air. The mix door is disposed at a downstream distal end of a partition wall that partitions the air flow path into the warm air flow path including the heater and the cold air flow path through which air bypassing the heater flows. The mix door is a sliding door, and adjusts the ratio of the air flowing toward the warm air flow path to the air flowing toward the cold air flow path. Cold air that flows through the cold air flow path reaches a mixing flow path (mixing space) through a cold air outlet. Warm air that flows through the warm air flow path reaches the mixing flow path through a warm air outlet.

The sliding door type mix door allows a large amount of warm air to flow from the warm air flow path to discharge portions by bringing the warm air outlet of the warm air flow path into a substantially fully open state (state in which the cold air outlet of the cold air flow path is slightly opened), that is, a somewhat warm state. However, a position of a defroster discharge portion capable of blowing air toward a windshield is closer to the cold air outlet than to the warm air outlet. The cold air flowing through the cold air flow path passes through the slightly opened cold air outlet and flows to the defroster discharge portion, thereby cooling indoor air around the windshield. By bringing the warm air outlet into a substantially fully open state, an ability to eliminate condensation on the windshield can be reduced in spite of the fact that a temperature in a vehicle interior is conditioned to be somewhat warm.

On the other hand, it is conceivable to reduce an amount of cold air flowing from the cold air outlet to the defroster discharge portion when the cold air outlet of the cold air flow path is slightly opened.

In general, a wind pressure in the cold air flow path in the state in which the cold air outlet is slightly opened or in a state in which the cold air outlet is partially opened is higher than that in a state in which the cold air outlet is fully opened. Therefore, the cold air flowing through the cold air flow path easily flows to the defroster discharge portion through the slightly opened cold air outlet and the mixing flow path. In order to change this, the wind pressure in the cold air flow path may be reduced by introducing a part of the cold air flowing through the cold air flow path into the warm air flow path. As a result, the amount of cold air flowing from the cold air outlet to the defroster discharge portion can be reduced to some extent. This is a technique for reducing the amount of cold air reaching the defroster discharge portion.

Apart from this, a vehicle air conditioner is known from JP2009-227026A in which a tunnel-shaped warm air guide member is disposed in a mixing flow path (mixing space) which is a merging portion of a warm air flow path and a cold air flow path. The warm air guide member is disposed in the merging portion so as to cross flow of cold air in the mixing flow path, and guides a part of warm air from the warm air flow path toward the vicinity of a defroster discharge portion. It is possible to cause the warm air flowing from the warm air flow path into the warm air guide member to flow out to the vicinity of the defroster discharge portion. This is a technique for increasing an amount of warm air reaching the defroster discharge portion. A vehicle air conditioner is known from WO 2021/038154 A1 in which a cold air introduction path is formed in a concave shape recessed from a door plate of a mix door. This cold air introduction path is configured to introduce cold air from a cold air outlet of the cold air flow path into a warm air outlet of the warm air flow path when the mix door does not maximize a rate of air flowing toward the warm air flow path.

### [Summary of Invention]

### [Technical Problem]

However, by simply combining the technique of introducing a part of the cold air flowing through the cold air flow path into the warm air flow path with the warm air guide member in JP2009-227026A (by simply combining the technique of reducing the amount of cold air reaching the defroster discharge portion with the technique of increasing the amount of warm air reaching the defroster discharge portion), a fogging phenomenon (condensation phenomenon) occurring in a windshield may not be effectively eliminated.

A part of the cold air is introduced from the cold air flow path into the warm air flow path, and flows toward the mixing flow path by warm air flowing through the warm air outlet. At this time, the cold air introduced into the warm air flow path may flow into the warm air guide member and flow out to the vicinity of the defroster discharge portion. As a result, a temperature of air in the defroster discharge portion decreases, and a condensation phenomenon may not be effectively eliminated.

Therefore, an object is to provide a technique capable of effectively eliminating a fogging phenomenon occurring in a windshield in a vehicle air conditioner including a sliding mix door.

### [Solution to Problem]

In the following description, reference numerals in the accompanying drawings are appended in parentheses to facilitate understanding of the present invention, but the present invention is not limited to the illustrated embodiments.

According to a first aspect of the present invention as defined in claim 1, there is provided a vehicle air conditioner (10, 200 to 600) including:
a housing (42) provided with an air flow path (41) inside;
an evaporator (43) provided in the air flow path (41);
a heater unit (44) provided downstream of the evaporator (43);
a partition wall (47) configured to partition the air flow path (41) into a warm air flow path (45) including the heater unit (44) and a cold air flow path (46) bypassing the heater unit (44);
a sliding mix door (60) disposed at a downstream distal end (47a) of the partition wall (47), and configured to adjust a rate of air flowing toward the warm air flow path (45) to air flowing toward the cold air flow path (46);
at least one cold air introduction path (80) formed in a concave shape recessed from a door plate (61) of the mix door (60) toward a side opposite to the downstream distal end (47a) by at least one partition portion (70) bulging from the door plate (61) toward the side opposite to the downstream distal end (47a), and configured to introduce cold air from a cold air outlet (46a) of the cold air flow path (46) into a warm air outlet (45a) of the warm air flow path (45) when the mix door (60) does not maximize a rate of air flowing toward the warm air flow path (45) and adjusts the rate of the air flowing toward the warm air flow path (45) to be larger than a rate of air flowing toward the cold air flow path (46); and
the vehicle air conditioner being characterized in that it comprises at least one warm air guide passage (110) implemented by an internal space (101) of at least one hollow guide member (100), including a guide introduction port (111) located away from an outlet (81) of the cold air introduction path (80), and configured to guide warm air from the warm air outlet (45a) of the warm air flow path (45) to a defroster discharge portion (51).

Preferably, according to a second aspect, in the vehicle air conditioner of the first aspect,
the number of partition portions (70) and the number of cold air introduction paths (80) are plural,
the plurality of partition portions (70) and the plurality of cold air introduction paths (80) extend from the cold air flow path (46) to the warm air flow path (45), and are disposed in parallel at intervals from each other along the door plate (61), and
the guide member (100) is provided at a position corresponding to a space (91) between the plurality of partition portions (70) when viewed from a mixing flow path (48) side in which air flowing from the cold air flow path (46) and air flowing from the warm air flow path (45) are mixed.

Preferably, according to a third aspect, in the vehicle air conditioner of the second aspect, the space (91) is closed by a ventilation restricting portion (292, 392) configured to restrict flow of cold air from the cold air flow path (46) to the warm air flow path (45).

Preferably, according to a fourth aspect, in the vehicle air conditioner of the third aspect, the ventilation restricting portion (292) protrudes from the door plate (61) toward a mixing flow path (48) side in a range of the space (91), and is formed in a mesh shape when viewed from the mixing flow path (48) side.

Preferably, according to a fifth aspect, in the vehicle air conditioner of the third aspect, the ventilation restricting portion (392) is implemented by a member separate from the mix door (60).

Preferably, according to a sixth aspect, in the vehicle air conditioner of the second aspect, the warm air guide passage (110) passes through the space (91).

### [Advantageous Effects of Invention]

According to the present invention, it is possible to effectively eliminate a fogging phenomenon occurring on a windshield in the vehicle air conditioner including the sliding mix door.

### [Brief Description of Drawings]

[Fig. 1]

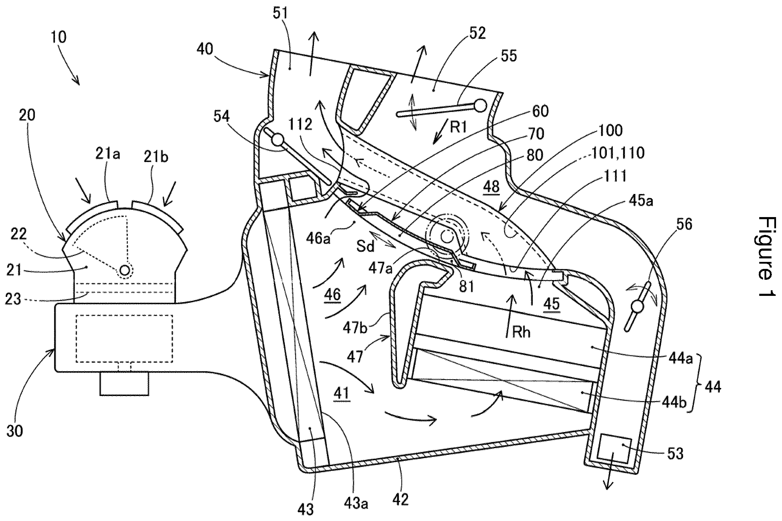

   Fig. 1 is a schematic cross-sectional view illustrating a vehicle air conditioner according to Embodiment 1.
[Fig. 2]

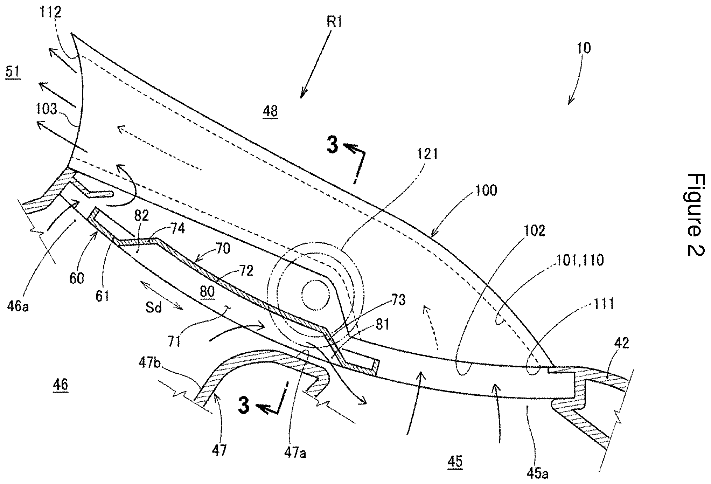

   Fig. 2 is a cross-sectional view around a mix door, a partition portion, and a guide member shown in Fig. 1.
[Fig. 3]

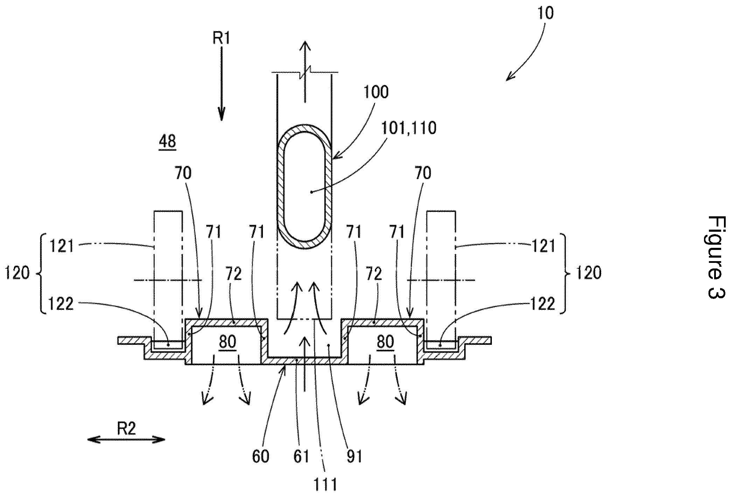

   Fig. 3 is a cross-sectional view taken along a line 3-3 in Fig. 2.
[Fig. 4]

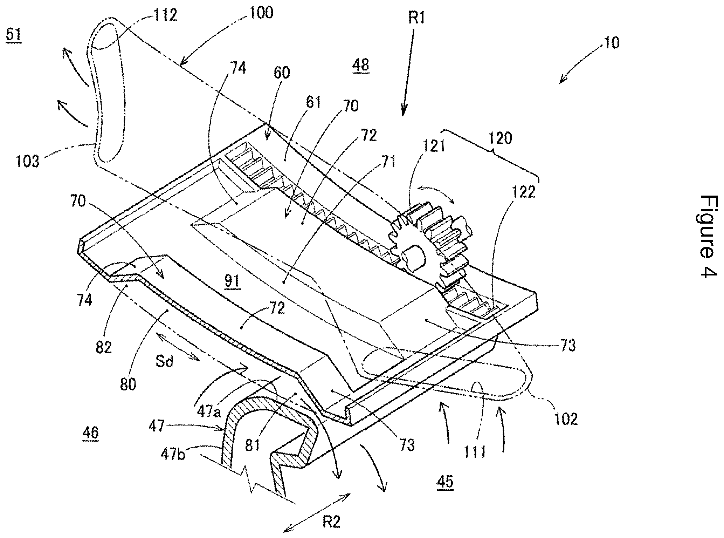

   Fig. 4 is a perspective view of the partially sectioned mix door, partition portion, and guide member shown in Fig. 2.
[Fig. 5]

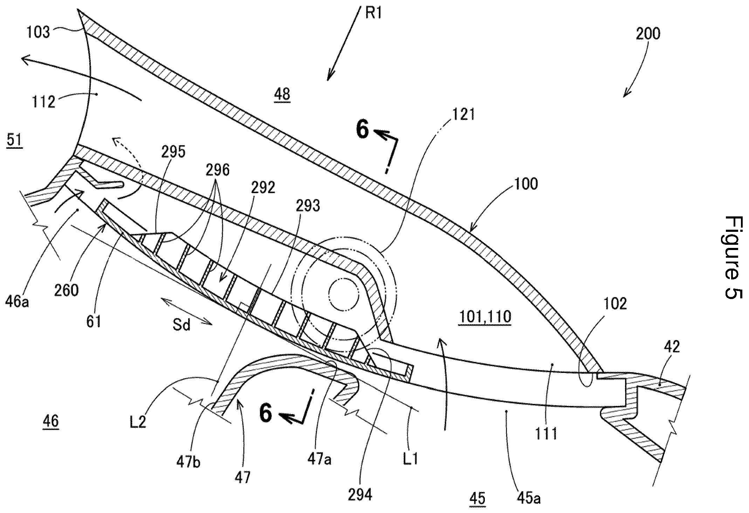

   Fig. 5 is a cross-sectional view around a mix door, a partition portion, and a guide member of a vehicle air conditioner according to Embodiment 2.
[Fig. 6]

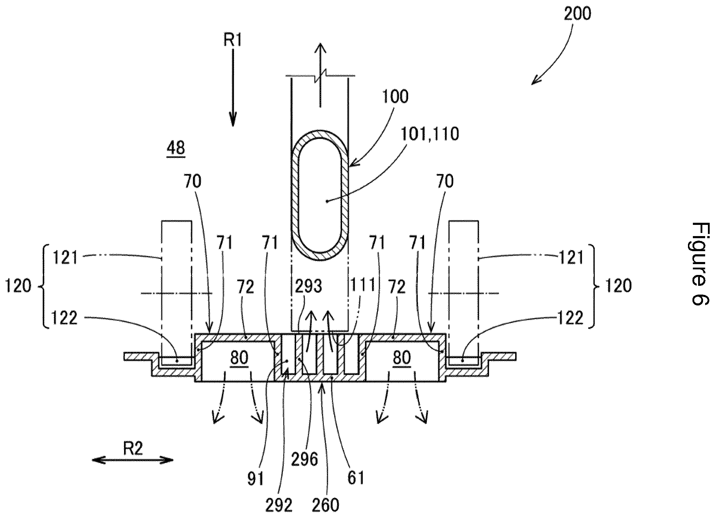

   Fig. 6 is a cross-sectional view along a line 6-6 in Fig. 5.
[Fig. 7]

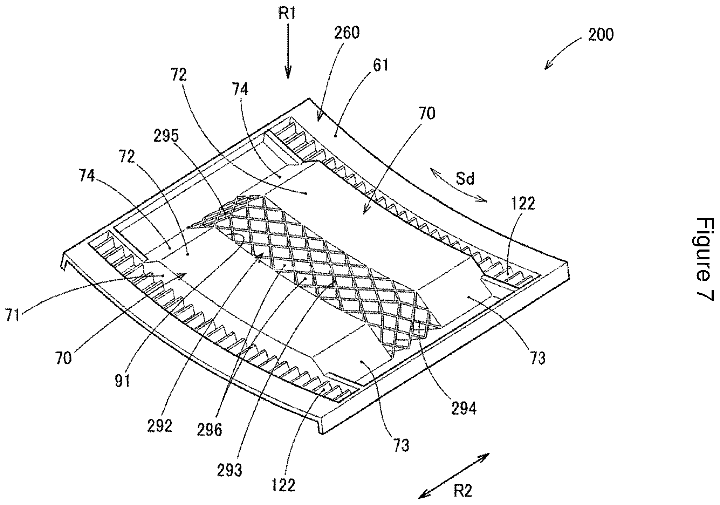

   Fig. 7 is a perspective view of the mix door, the partition portion, and a ventilation restricting portion shown in Fig. 5.
[Fig. 8]

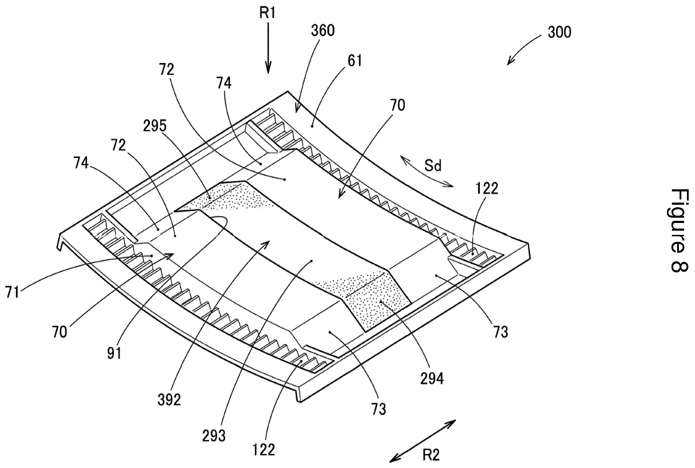

   Fig. 8 is a perspective view around a mix door, a partition portion, and a ventilation restricting portion of a vehicle air conditioner according to Embodiment 3.
[Fig. 9]

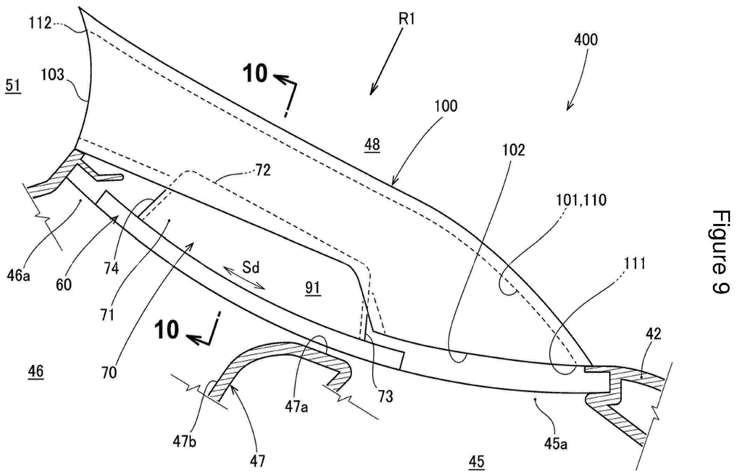

   Fig. 9 is a side view around a mix door, a partition portion, and a guide member of a vehicle air conditioner according to Embodiment 4.
[Fig. 10]

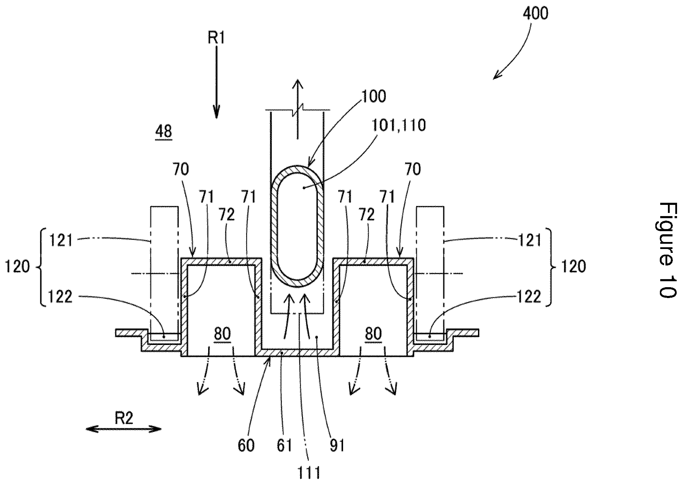

   Fig. 10 is a cross-sectional view taken along a line 10-10 in Fig. 9.
[Fig. 11]

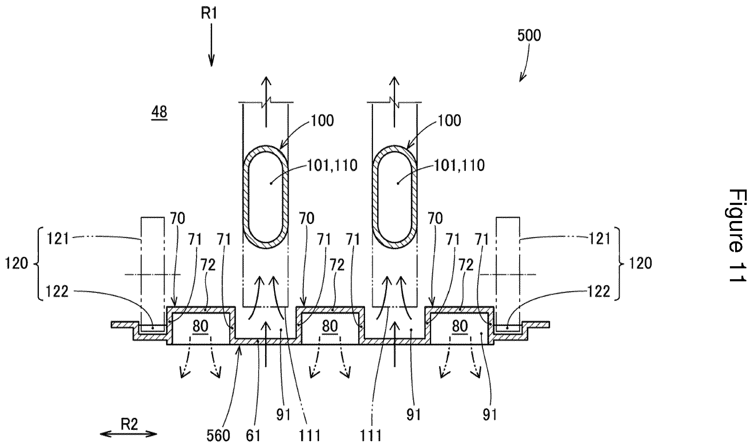

   Fig. 11 is a cross-sectional view of a mix door, a partition portion, and a guide member of a vehicle air conditioner according to Embodiment 5 as viewed from a sliding direction of the mix door.
[Fig. 12]

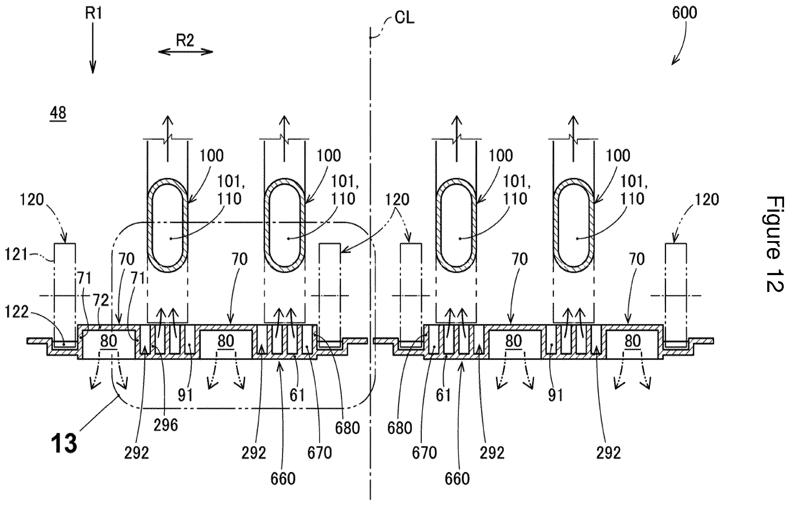

   Fig. 12 is a cross-sectional view of a mix door, a partition portion, and a guide member of a vehicle air conditioner according to Embodiment 6 as viewed from a sliding direction of the mix door.
[Fig. 13]

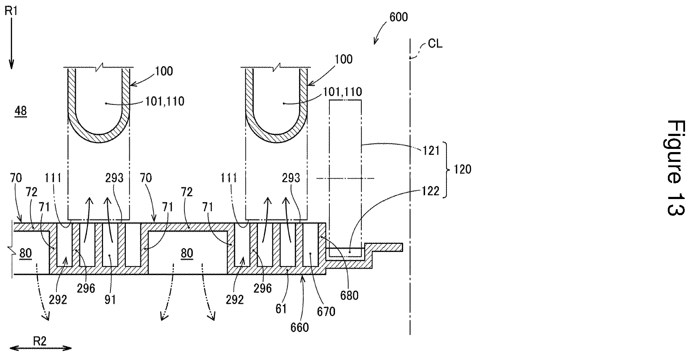

   Fig. 13 is an enlarged view of a portion 13 in Fig. 12.
[Fig. 14]

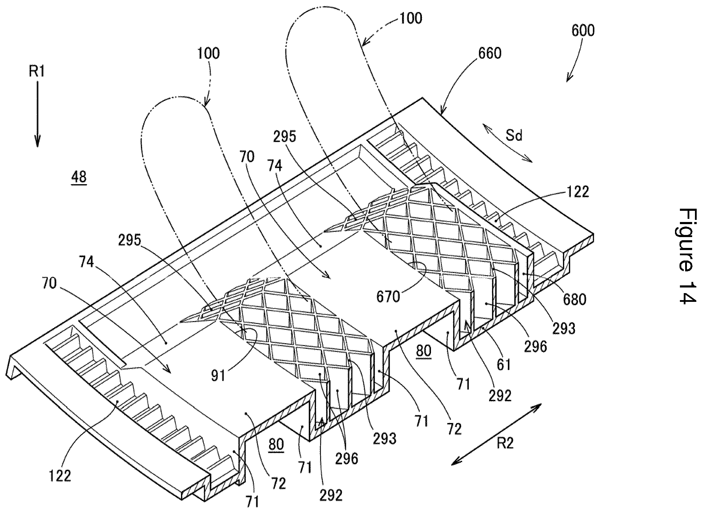

   Fig. 14 is a perspective view of the mix door, the partition portion, and a ventilation restricting portion, which is a partial cross-sectional view shown in Fig. 12.

### [Description of Embodiments]

Embodiments of the present invention will be described below with reference to the accompanying drawings. The embodiments illustrated in the accompanying drawings are examples of the present invention, and the present invention is not limited to these embodiments.

### Embodiment 1

A vehicle air conditioner 10 according to Embodiment 1 will be described with reference to Figs. 1 to 4.

As shown in Fig. 1, the vehicle air conditioner 10 can be mounted on a vehicle such as a passenger vehicle (not shown), and adjusts (conditions) a temperature of air in a vehicle interior. The vehicle air conditioner 10 includes an intake unit 20 (inside-outside air switching unit 20) that switches between outside air to be introduced and inside air, a blower unit 30 that blows air introduced from the intake unit 20, and an interior air conditioning unit 40 that conditions air blown from the blower unit 30 and supplies the conditioned air to the vehicle interior.

The intake unit 20 includes an intake box 21, an intake door 22, and a filter 23. The intake box 21 includes an outside air inlet 21a through which air (outside air) can be introduced from the outside of the vehicle interior, and an inside air inlet 21b through which air (inside air) can be introduced from the inside of the vehicle interior. The intake door 22 switches between opening and closing of the outside air inlet 21a and the inside air inlet 21b. The filter 23 cleans the air introduced from the outside air inlet 21a and the inside air inlet 21b.

The interior air conditioning unit 40 includes a housing 42 provided with an air flow path 41 inside, an evaporator 43 provided in the air flow path 41, a heater unit 44 provided downstream of the evaporator 43, a partition wall 47 that partitions the air flow path 41 into a warm air flow path 45 and a cold air flow path 46, and a mix door 60 disposed at a downstream distal end 47a (edge 47a) of the partition wall 47. The mix door 60 is, for example, a resin molded product and is at least one sliding door. In Embodiment 1, a configuration in which one mix door 60 is provided is exemplified.

The air flow path 41 of the housing 42 includes the warm air flow path 45 and the cold air flow path 46 which are present downstream of the evaporator 43, and a mixing flow path 48 in which air flowing from the cold air flow path 46 and air flowing from the warm air flow path 45 are mixed to become conditioned air. The warm air flow path 45 includes a heater unit 44. The cold air flow path 46 is a bypass passage bypassing the heater unit 44.

The evaporator 43 is a cooling heat exchanger that cools air by heat exchange between air blown from the blower unit 30 and a refrigerant in a refrigeration cycle (including heat pump system) (not shown).

The heater unit 44 is a heat source provided in the warm air flow path 45, and includes, for example, an electric heater 44a. As the electric heater 44a, a PTC heater having particularly stable temperature characteristics is more preferably adopted. The PTC heater includes a PTC element (positive characteristic thermistor element), and is an electrically heat-generating type air heater that heats air by generating heat when the PTC element is supplied with electric power.

The heater unit 44 may include a warm water heater 44b in addition to the electric heater 44a. The warm water heater 44b is located upstream of the electric heater 44a in a flow direction Rh of air passing through the heater unit 44, and heats the air after passing through the evaporator 43 by warm water. The warm water heater 44b is supplied with, for example, warm cooling water (warm water) after cooling an engine that outputs a driving force for vehicle traveling.

The heater unit 44 may be a heat source including only the electric heater 44a or only the warm water heater 44b. Alternatively, although not shown, the heater unit 44 may be a radiator that dissipates heat from a high-temperature and high-pressure refrigerant.

As described above, the partition wall 47 is provided downstream of the evaporator 43, and partitions the air flow path 41 into the warm air flow path 45 through which cold air from the evaporator 43 flows while being heated, and the cold air flow path 46 (bypass passage 46) through which cold air from the evaporator 43 flows as it is.

An arrangement relation of the heater unit 44, a warm air outlet 45a of the warm air flow path 45, a cold air outlet 46a of the cold air flow path 46, and the partition wall 47 with respect to the evaporator 43 is preferably set as follows.

A wall surface 47b of the partition wall 47 faces an outflow surface 43a of the evaporator 43. For example, the wall surface 47b of the partition wall 47 is parallel (including substantially parallel) to the outflow surface 43a of the evaporator 43. The cold air flow path 46 is a space between the outflow surface 43a of the evaporator 43 and the wall surface 47b of the partition wall 47. The warm air flow path 45 is a space opposite to the cold air flow path 46 with respect to the partition wall 47.

As shown in Fig. 2, the warm air outlet 45a of the warm air flow path 45 and the cold air outlet 46a of the cold air flow path 46 are located at the downstream distal end 47a (including the vicinity of the downstream distal end 47a) of the partition wall 47. The warm air outlet 45a and the cold air outlet 46a are continuous in a sliding direction Sd of the mix door 60 via the downstream distal end 47a. An opening degree of the warm air outlet 45a and an opening degree of the cold air outlet 46a are changed by a sliding movement of the mix door 60 along the downstream distal end 47a.

More specifically, the warm air outlet 45a and the cold air outlet 46a are formed in an arc shape (inverted arch shape) protruding toward the flow paths 45 and 46, respectively.

The mix door 60 includes a plate-shaped door plate 61 curved in an arc shape in the sliding direction Sd in accordance with the shapes of the outlet 45a and the outlet 46a. The mix door 60 can adjust a ratio of air flowing toward the warm air flow path 45 to air flowing toward the cold air flow path 46.

As shown in Fig. 1, the housing 42 includes at least three discharge portions (discharge ports), that is, a defroster discharge portion 51, a vent discharge portion 52, and a foot discharge portion 53 for blowing out conditioned air in the mixing flow path 48. The defroster discharge portion 51 can blow out conditioned air toward a windshield (not shown). The vent discharge portion 52 can blow out conditioned air toward an upper body of a passenger on a front seat. The foot discharge portion 53 can blow out conditioned air toward legs of the passenger on the front seat. The defroster discharge portion 51 can be opened and closed by a first door 54. The vent discharge portion 52 can be opened and closed by a second door 55. The foot discharge portion 53 can be opened and closed by a third door 56. Each of the doors 54 to 56 is implemented by, for example, a swing door (butterfly door or cantilever door) .

Next, the mix door 60 will be described in detail. As shown in Figs. 2 to 4, the mix door 60 is a resin molded product, and includes at least one partition portion 70 bulging toward a mixing flow path 48 side and at least one cold air introduction path 80 formed in a concave shape inside the partition portion 70 (surrounded by the partition portion 70). The partition portion 70 and the cold air introduction path 80 extend from the cold air outlet 46a toward the warm air outlet 45a.

In detail, the partition portion 70 bulges from the door plate 61 to a side opposite to the downstream distal end 47a (mixing flow path 48 side) so as to have the cold air introduction path 80 inside, and is opened to the mixing flow path 48 side. The partition portion 70 may only be provided integrally with the door plate 61. The partition portion 70 may be integrally molded with the door plate 61, or may be joined to another member.

A cross-sectional shape of the partition portion 70 as viewed from the sliding direction Sd of the mix door 60 is an inverted U shape as shown in Fig. 3. For example, the partition portion 70 is formed in an inverted U-shaped cross section by a pair of vertical plates 71, 71 rising from the door plate 61 and a top plate 72 blocking upper ends of the vertical plates 71, 71. The partition portion 70 may have an inverted U shape, and may have, for example, a trapezoidal shape, a tapered shape, or an arc shape. The top plate 72 has an arc shape along the door plate 61.

The cold air introduction path 80 is an air passage in a concave shape (groove shape along the sliding direction Sd of the mix door 60) recessed from the door plate 61 toward the side opposite to the downstream distal end 47a (mixing flow path 48 side) by the partition portion 70, and is opened to a downstream distal end 47a side. A cross-sectional shape of the cold air introduction path 80 as viewed from the sliding direction Sd of the mix door 60 is preferably a rectangular shape shown in Fig. 3, but is not limited thereto, and may be, for example, a trapezoidal shape, a tapered shape, or an arc shape.

Here, as shown in Fig. 2, a state in which the mix door 60 does not maximize a rate of air flowing toward the warm air flow path 45 and adjusts the rate of the air flowing toward the warm air flow path 45 to be larger than a rate of air flowing toward the cold air flow path 46 is referred to as "an opening degree of the cold air flow path 46 is small". When the opening degree of at least the cold air flow path 46 is small, that is, when the cold air outlet 46a of the cold air flow path 46 is slightly opened by the mix door 60, the cold air introduction path 80 can introduce cold air from the cold air outlet 46a of the cold air flow path 46 to the warm air outlet 45a of the warm air flow path 45.

As described above, the cold air introduction path 80 has a groove shape along the sliding direction Sd of the mix door 60 by the partition portion 70. An end 81 on a warm air flow path 45 side of the cold air introduction path 80 having a groove shape is referred to as a "first end 81 (outlet 81)", and an end 82 on a cold air flow path 46 side of the cold air introduction path 80 is referred to as a "second end 82 (inlet 82)". The first end 81 is an end that closes the warm air flow path 45 by the mix door 60 and is partitioned by a first end plate 73 of the partition portion 70. The second end 82 is an end that closes the cold air flow path 46 by the mix door 60 and is partitioned by a second end plate 74 of the partition portion 70. The first end plate 73 and the second end plate 74 are inclined to approach each other while rising from the door plate 61. Therefore, the cold air is smoothly introduced from the cold air outlet 46a to the warm air outlet 45a.

When the mix door 60 fully closes the warm air flow path 45, the second end 82 is located closer to the warm air flow path 45 than the downstream distal end 47a of the partition wall 47. When the mix door 60 fully closes the cold air flow path 46, the first end 81 is located closer to the cold air flow path 46 than the downstream distal end 47a of the partition wall 47. In either case, flow of the air between the warm air flow path 45 and the cold air flow path 46 through the cold air introduction path 80 is restricted.

As shown in Fig. 2, the cold air introduction path 80 can introduce the cold air introduced from the cold air outlet 46a from the first end 81 to the warm air outlet 45a in the state in which the cold air outlet 46a is slightly opened by the mix door 60. This is the reason why the first end 81 is referred to as the "outlet 81 of the cold air introduction path 80".

The reason why the cold air introduction path 80 can introduce the cold air introduced from the cold air outlet 46a from the first end 81 into the warm air outlet 45a in the state in which the cold air outlet 46a is slightly opened by the mix door 60 will be described.

Reference is made to Fig. 1. Cold air flowing out from the outflow surface 43a of the evaporator 43 is supplied to the cold air flow path 46. The cold air flowing out from the outflow surface 43a of the evaporator 43 is supplied to the warm air flow path 45 after passing through the heater unit 44. Here, an air pressure (static pressure) in the warm air flow path 45 is reduced by the heater unit 44. That is, there is a pressure difference between the air pressure (static pressure) in the warm air flow path 45 and an air pressure (static pressure) in the cold air flow path 46, and the air pressure (static pressure) in the warm air flow path 45 is lower than the air pressure (static pressure) in the cold air flow path 46. Then, as shown in Fig. 2, when the cold air flow path 46 and the warm air flow path 45 communicate with each other through the cold air introduction path 80, the cold air is introduced into (flows into) the cold air introduction path 80 from the cold air outlet 46a of the cold air flow path 46 having a high pressure, and is led out (flows out) to the warm air outlet 45a of the warm air flow path 45 having a low pressure. In addition, the pressure difference between the air pressure (static pressure) in the warm air flow path 45 and the air pressure (static pressure) in the cold air flow path 46 increases when the mix door 60 adjusts the rate of the air flowing toward the warm air flow path 45 to be larger than the rate of the air flowing toward the cold air flow path 46.

It is preferred that both the number of partition portions 70 and the number of cold air introduction paths 80 are plural. In Embodiment 1, as shown in Figs. 3 and 4, a configuration in which both the number of partition portions 70 and the number of cold air introduction paths 80 are two is exemplified.

The partition portions 70 and the cold air introduction paths 80 extend from the cold air flow path 46 to the warm air flow path 45, and are disposed in parallel at constant intervals from each other along the door plate 61. Therefore, a space 91 is provided between the partition portions 70. The space 91 is defined by the door plate 61 and the opposing vertical plates 71, 71 of the respective partition portions 70.

As shown in Fig. 1, the vehicle air conditioner 10 includes at least one hollow guide member 100 and at least one warm air guide passage 110 implemented by an internal space 101 of the guide member 100. The guide member 100 is, for example, a resin molded product.

The warm air guide passage 110 is an air passage for guiding warm air from the warm air outlet 45a of the warm air flow path 45 to the defroster discharge portion 51, and is located in the mixing flow path 48. The warm air guide passage 110 includes a guide introduction port 111 opened toward the warm air outlet 45a and a guide lead-out port 112 opened toward the defroster discharge portion 51.

As shown in Fig. 2, the guide introduction port 111 is opened to a first opening end 102 of the guide member 100. The guide lead-out port 112 is opened to a second opening end 103 of the guide member 100.

The guide introduction port 111 is located in the vicinity of the warm air outlet 45a and at a height that does not affect the sliding movement of the mix door 60. For example, the entire guide member 100 is located at a height that does not interfere with the mix door 60 and the top plates 72 of the partition portions 70. Further, it is preferred that the guide introduction port 111 is opened to the warm air outlet 45a over the entire (including substantially the entire) sliding direction Sd of the mix door 60. The mix door 60 adjusts an opening degree of the guide introduction port 111 with respect to the warm air outlet 45a in accordance with adjustment of the opening degree of the warm air outlet 45a.

Here, as shown in Fig. 4, a direction R2 that intersects the sliding direction Sd of the mix door 60 when the mix door 60 and the guide member 100 (warm air guide passage 110) are viewed from the mixing flow path 48 side toward the downstream distal end 47a of the partition wall 47 (in arrow R1 direction) is referred to as a "slide intersecting direction R2".

The guide member 100 and the warm air guide passage 110 extend above and along the space 91 between the partition portions 70 as a whole. Therefore, at least the guide introduction port 111 is located away from the outlet 81 (first end 81) of the cold air introduction path 80 in the slide intersecting direction R2. As described above, the guide introduction port 111 is located away from the outlet 81 (first end 81) of the cold air introduction path 80.

As described above, the guide members 100 are provided at respective positions corresponding to the plurality of spaces 91 between the plurality of partition portions 70 when viewed from the mixing flow path 48 side (arrow R1 direction) in which the air flowing from the cold air flow path 46 and the air flowing from the warm air flow path 45 are mixed.

As shown in Fig. 4, the mix door 60 is driven in the sliding direction Sd by a rack and pinion mechanism 120. The rack and pinion mechanism 120 includes a pinion 121 driven by a motor (drive source) (not shown) and a rack 122 formed on a plate surface of the door plate 61 of the mix door 60 in a manner of meshing with the pinion 121. The rack and pinion mechanism 120 is preferably positioned on the mixing flow path 48 side.

The description of the vehicle air conditioner 10 according to Embodiment 1 is summarized as follows.

As shown in Figs. 2 and 4, the vehicle air conditioner 10 includes: at least one cold air introduction path 80 formed in a concave shape recessed from the door plate 61 of the mix door 60 toward a side opposite to the downstream distal end 47a by at least one partition portion 70 bulging from the door plate 61 toward the side opposite to the downstream distal end 47a, and configured to introduce cold air from the cold air outlet 46a of the cold air flow path 46 into the warm air outlet 45a of the warm air flow path 45 when the mix door 60 does not maximize a rate of air flowing toward the warm air flow path 45 and adjusts the rate of the air flowing toward the warm air flow path 45 to be larger than a rate of air flowing toward the cold air flow path 46; and at least one warm air guide passage 110 implemented by the internal space 101 of at least one hollow guide member 100, including the guide introduction port 111 located away from the outlet 81 of the cold air introduction path 80 (located so as not to overlap in the slide intersecting direction R2 from the outlet 81 of the cold air introduction path 80), and configured to guide warm air from the warm air outlet 45a of the warm air flow path 45 to the defroster discharge portion 51.

The vehicle air conditioner 10 provided with the sliding door type mix door 60 further includes the cold air introduction path 80 and the warm air guide passage 110. The cold air introduction path 80 can introduce cold air from the cold air outlet 46a of the cold air flow path 46 into the warm air outlet 45a of the warm air flow path 45. When the mix door 60 adjusts the rate of the air flowing toward the warm air flow path 45 to be larger than the rate of the air flowing toward the cold air flow path 46, that is, when the cold air outlet 46a is partially opened, a wind pressure in the cold air flow path 46 can be reduced by introducing a part of the cold air flowing through the cold air flow path 46 into the warm air flow path 45. As a result, an amount of cold air flowing from the cold air outlet 46a to the defroster discharge portion 51 can be reduced.

The warm air guide passage 110 can guide warm air from the warm air outlet 45a of the warm air flow path 45 to the defroster discharge portion 51. Therefore, the warm air flowing from the warm air flow path 45 to the warm air guide passage 110 can be caused to flow out to the vicinity of the defroster discharge portion 51.

An amount of cold air flowing from the cold air outlet 46a to the vicinity of the windshield (not shown) is reduced, and warm air is forced to flow from the warm air flow path 45 to the vicinity of the windshield, so that it is possible to prevent indoor air in the vicinity of the windshield from being too cold. As a result, it is possible to effectively eliminate a fogging phenomenon occurring on the windshield.

In addition, the guide introduction port 111 of the warm air guide passage 110 is located away from the outlet 81 (first end 81) of the cold air introduction path 80 (for example, as shown in Fig. 4, a position of the guide introduction port 111 is shifted in the slide intersecting direction R2). Therefore, the vehicle air conditioner 10 can be formed such that cold air flowing from the outlet 81 (first end 81) of the cold air introduction path 80 to the warm air outlet 45a of the warm air flow path 45 does not flow into the guide introduction port 111 of the warm air guide passage 110. It is possible to prevent a temperature of the warm air taken in the warm air guide passage 110 from decreasing by the cold air introduced from the cold air introduction path 80 to the warm air outlet 45a. As a result, it is possible to further prevent the indoor air in the vicinity of the windshield from being too cold. It is possible to effectively eliminate the fogging phenomenon occurring on the windshield.

Further, both the number of partition portions 70 and the number of cold air introduction paths 80 are plural. The plurality of partition portions 70 and the plurality of cold air introduction paths 80 extend from the cold air flow path 46 to the warm air flow path 45, and are disposed in parallel at intervals from each other along the door plate 61 (disposed in parallel in the slide intersecting direction R2). The guide members 100 are provided at the respective positions corresponding to the spaces 91 between the plurality of partition portions 70 when viewed from the mixing flow path 48 side (arrow R1 direction) in which the air flowing from the cold air flow path 46 and the air flowing from the warm air flow path 45 are mixed.

As described above, the guide members 100 are provided at the respective positions corresponding to the spaces 91 between the partition portions 70 when viewed from the mixing flow path 48 side. That is, the guide member 100 does not overlap the partition portions 70 when viewed from the mixing flow path 48 side. In this manner, the vehicle air conditioner 10 can be formed such that cold air flowing from the outlets 81 (first ends 81) of the plurality of cold air introduction paths 80 to the warm air outlet 45a of the warm air flow path 45 does not flow into the warm air guide passage 110.

### Embodiment 2

A vehicle air conditioner 200 according to Embodiment 2 will be described with reference to Figs. 5 to 7. Fig. 5 corresponds to Fig. 2. Fig. 6 corresponds to Fig. 3. Fig. 7 corresponds to Fig. 4.

In the vehicle air conditioner 200 according to Embodiment 2, the mix door 60 in Embodiment 1 shown in Figs. 1 to 4 is changed to a mix door 260 shown in Figs. 5 to 7. Other configurations of the vehicle air conditioner 200 are common to those of the vehicle air conditioner 10 according to Embodiment 1. Parts common to those of the vehicle air conditioner 10 according to Embodiment 1 will be denoted by the same reference numerals, and detailed description thereof will be omitted.

The mix door 260 in Embodiment 2 is a resin molded product, and the space 91 is closed by a ventilation restricting portion 292. The ventilation restricting portion 292 restricts flow of cold air from the cold air flow path 46 to the warm air flow path 45, and is preferably provided over the entire space 91. For example, a contour of the ventilation restricting portion 292 matches a contour of the partition portion 70 as shown in Fig. 7. An upper surface 293 of the ventilation restricting portion 292 is flush with an upper surface of the top plate 72 of the partition portion 70. A first inclined surface 294 of the ventilation restricting portion 292 is flush with an outer surface of the inclined first end plate 73 of the partition portion 70. A second inclined surface 295 of the ventilation restricting portion 292 is flush with an outer surface of the inclined second end plate 74 of the partition portion 70.

The ventilation restricting portion 292 protrudes from the door plate 61 toward the mixing flow path 48 within a range of the space 91, and is formed in a mesh shape when viewed from the mixing flow path 48 side (arrow R1 direction). Here, the mesh shape includes a grid shape and a honeycomb shape.

In detail, the ventilation restricting portion 292 is formed in a mesh shape by a combination of a plurality of vertical plate-shaped plate members 296 that rise from the door plate 61 toward the mixing flow path 48. The plurality of plate members 296 are aligned in parallel with each other such that when the mix door 260 is molded from a resin, it is possible to release a mold toward the mixing flow path 48 side. For example, as shown in Fig. 5, with a reference line L2 perpendicular to a tangent line L1 of the arc-shaped door plate 61 as a reference, all the plate members 296 are aligned parallel to the reference line L2. Therefore, a mold for molding can be easily released in a direction along the reference line L2.

The description of the vehicle air conditioner 200 according to Embodiment 2 is summarized as follows.

The space 91 is closed by the ventilation restricting portion 292 that restricts the flow of cold air from the cold air flow path 46 to the warm air flow path 45. By closing the space 91 with the ventilation restricting portion 292, it is possible to more reliably prevent a part of the cold air flowing through the cold air flow path 46 from flowing into the warm air guide passage 110 via the space 91.

Further, the ventilation restricting portion 292 protrudes from the door plate 61 toward the mixing flow path 48 within the range of the space 91, and is formed in a mesh shape when viewed from the mixing flow path 48 side (arrow R1 direction).

The ventilation restricting portion 292 provided in the space 91 protrudes from the door plate 61 toward the mixing flow path 48 side, and thus functions as a baffle (role of inhibiting flow of air) to prevent the cold air from flowing from the cold air flow path 46 toward the warm air flow path 45.

The ventilation restricting portion 292 protruding from the door plate 61 toward the mixing flow path 48 is formed in a mesh shape when viewed from the mixing flow path 48 side. When the mix door 260 is manufactured by using an injection molding process of a resin member, the ventilation of the space 91 can be reliably restricted as long as the ventilation restricting portion 292 has a mesh shape, and the manufacturing by injection molding is possible and is preferred because it contributes to further reduction in weight.

By filling the space 91 with a mesh-shaped resin material, a strength of the mix door 260 can be improved.

In addition to effects in Embodiment 2, the vehicle air conditioner 200 according to Embodiment 2 can achieve the same effects as those of the vehicle air conditioner 10 according to Embodiment 1.

### Embodiment 3

A vehicle air conditioner 300 according to Embodiment 3 will be described with reference to Fig. 8. Fig. 8 corresponds to Fig. 7.

In the vehicle air conditioner 300 according to Embodiment 3, the mix door 260 in Embodiment 2 shown in Figs. 5 to 7 is changed to a mix door 360 shown in Fig. 8. Other configurations of the vehicle air conditioner 300 are common to those of the vehicle air conditioner 200 according to Embodiment 2. Parts common to those of the vehicle air conditioner 200 according to Embodiment 2 will be denoted by the same reference numerals, and detailed description thereof will be omitted.

The mix door 360 in Embodiment 3 is a resin molded product, and the space 91 is closed by a ventilation restricting portion 392. Similar to the ventilation restricting portion 292 in Embodiment 2 (see Fig. 7), the ventilation restricting portion 392 restricts flow of cold air from the cold air flow path 46 to the warm air flow path 45, and is preferably provided over the entire space 91. For example, it is preferred that a contour of the ventilation restricting portion 392 matches the contour of the partition portion 70 and the entire contour of the ventilation restricting portion 292 in Embodiment 2.

Further, the ventilation restricting portion 392 is implemented by a member (for example, sponge or rubber material) separate from the mix door 360, and can be integrated with the mix door 360 by adhesion or the like.

As described above, since the ventilation restricting portion 392 is implemented by a member separate from the mix door 360, a degree of freedom in designing the ventilation restricting portion 392 can be increased without being limited to a material or a shape of the mix door 360.

In addition to effects in Embodiment 3, the vehicle air conditioner 300 according to Embodiment 3 can achieve the same effects as those of the vehicle air conditioner 10 according to Embodiment 1 and the vehicle air conditioner 200 according to Embodiment 2.

### Embodiment 4

A vehicle air conditioner 400 according to Embodiment 4 will be described with reference to Figs. 9 and 10. Fig. 9 corresponds to Fig. 2. Fig. 10 corresponds to Fig. 3.

In the vehicle air conditioner 400 according to Embodiment 4, an arrangement relation of the guide member 100 and the warm air guide passage 110 with respect to the mix door 60 in Embodiment 1 shown in Figs. 1 to 4 is changed. Other configurations of the vehicle air conditioner 400 are common to those of the vehicle air conditioner 10 according to Embodiment 1. Parts common to those of the vehicle air conditioner 10 according to Embodiment 1 will be denoted by the same reference numerals, and detailed description thereof will be omitted.

Respective configurations of the mix door 60, the partition portion 70, the cold air introduction path 80, the space 91, the guide member 100, and the warm air guide passage 110 are the same as those of Embodiment 1.

A feature of the vehicle air conditioner 400 according to Embodiment 4 is that the warm air guide passage 110 passes through the space 91. Therefore, by the warm air guide passage 110, the space 91 can be easily closed, and a part of cold air flowing through the cold air flow path 46 can be reliably prevented from flowing into the warm air flow path 45 via the space 91. By passing the warm air guide passage 110 through the space 91, a size of the mixing flow path 48 can be set smaller accordingly. Accordingly, the vehicle air conditioner 400 can be reduced in size.

In addition to effects in Embodiment 4, the vehicle air conditioner 400 according to Embodiment 4 can achieve the same effects as those of the vehicle air conditioner 10 according to Embodiment 1.

### Embodiment 5

A vehicle air conditioner 500 according to Embodiment 5 will be described with reference to Fig. 11. Fig. 11 corresponds to Fig. 3.

In the vehicle air conditioner 500 according to Embodiment 5, the mix door 60 in Embodiment 1 shown in Figs. 1 to 4 is changed to a mix door 560 shown in Fig. 11, and the number of guide members 100 is changed. Other configurations of the vehicle air conditioner 500 are common to those of the vehicle air conditioner 10 according to Embodiment 1. Parts common to those of the vehicle air conditioner 10 according to Embodiment 1 will be denoted by the same reference numerals, and detailed description thereof will be omitted.

In the mix door 560, both the number of partition portions 70 and the number of cold air introduction paths 80 are increased to three or more. The number of guide members 100 and the number of warm air guide passages 110 are also increased to plural (two or more). That is, the number of spaces 91, the number of guide members 100, and the number of warm air guide passages 110 are one less than the number of partition portions 70 and the number of cold air introduction path 80. In Embodiment 5, a configuration in which both the number of partition portions 70 and the number of cold air introduction paths 80 are three, and the number of spaces 91, the number of guide members 100, and the number of warm air guide passages 110 are two is exemplified. Each guide member 100 is provided at a position corresponding to each space 91.

As is clear from the above description, the number of partition portions 70, the number of cold air introduction paths 80, the number of guide members 100, and the number of warm air guide passages 110 are plural. The plurality of partition portions 70 and the plurality of cold air introduction paths 80 extend from the cold air flow path 46 to the warm air flow path 45, and are disposed in parallel at intervals from each other along the door plate 61. The plurality of guide members 100 are provided at respective positions corresponding to the plurality of spaces 91 between the plurality of partition portions 70 when viewed from the mixing flow path 48 side (arrow R1 direction) in which air flowing from the cold air flow path 46 and air flowing from the warm air flow path 45 are mixed.

As described above, the plurality of guide members 100 and the plurality of warm air guide passages 110 are provided at the respective positions corresponding to the spaces 91 between the partition portions 70 when viewed from the mixing flow path 48 side. That is, the guide member 100 does not overlap the partition portions 70 when viewed from the mixing flow path 48 side. In this manner, the vehicle air conditioner 500 can be formed such that cold air flowing from the outlets 81 (see Fig. 4) of the plurality of cold air introduction paths 80 to the warm air outlet 45a (see Fig. 4) of the warm air flow path 45 does not flow into the plurality of warm air guide passages 110.

In addition to effects in Embodiment 5, the vehicle air conditioner 500 according to Embodiment 5 can achieve the same effects as those of the vehicle air conditioner 10 according to Embodiment 1.

In the vehicle air conditioner 500 according to Embodiment 5, the space 91 can be closed by the ventilation restricting portion 292 (see Figs. 5 to 7) in Embodiment 2 or the ventilation restricting portion 392 (see Fig. 8) in Embodiment 3. In addition, the warm air guide passage 110 can pass through the space 91 as in Embodiment 3 shown in Figs. 9 and 10.

### Embodiment 6

A vehicle air conditioner 600 according to Embodiment 6 will be described with reference to Figs. 12 to 14. Fig. 12 corresponds to Fig. 6. Fig. 14 corresponds to Fig. 7.

In the vehicle air conditioner 600 according to Embodiment 6, the single mix door 260 in Embodiment 2 shown in Figs. 5 to 7 is changed to a plurality of mix doors 660 shown in Figs. 12 to 14, and the number of guide members 100 is changed. Other configurations of the vehicle air conditioner 600 are common to those of the vehicle air conditioner 200 according to Embodiment 2. Parts common to those of the vehicle air conditioner 200 according to Embodiment 2 will be denoted by the same reference numerals, and detailed description thereof will be omitted.

In Embodiment 6, as shown in Fig. 12, the number of mix doors 660 is plural (for example, two). The plurality of mix doors 660 are disposed in parallel in the slide intersecting direction R2. In this case, each mix door 660 can have a line-symmetrical or a non-line-symmetrical configuration with respect to a center line CL in the slide intersecting direction R2. All of the mix doors 660 are slidable in synchronization with the sliding direction Sd (a front-back direction in Fig. 12). For example, all of the mix doors 660 are driven by one motor (drive source) (not shown) through the rack and pinion mechanism 120.

When two or more mix doors 660 are provided, it is possible to sufficiently cope with even a case in which a size of the warm air outlet 45a of the warm air flow path 45 and a size of the cold air outlet 46a of the cold air flow path 46 are large in the slide intersecting direction R2.

Further, in Embodiment 6, as shown in Figs. 12 to 14, the number of partition portions 70 and the number of cold air introduction paths 80 are plural (for example, two) with respect to one mix door 660, as an example. In Embodiment 6, the number of guide members 100 and the number of warm air guide passages 110 are the same as the number of partition portions 70 and the number of cold air introduction paths 80 (for example, two). That is, the number of spaces 91 is one less than the number of partition portions 70 and the number of cold air introduction paths 80.

Therefore, one auxiliary space 670 corresponding to the space 91 is added to each mix door 660. In detail, each of the mix doors 660 is provided with an auxiliary vertical plate 680 rising from the door plate 61. The auxiliary vertical plate 680 is located outside the plurality of partition portions 70 disposed in parallel to the mix door 660 in the slide intersecting direction R2, and is parallel to the vertical plates 71 of the partition portions 70. The mix door 660 forms the auxiliary space 670 with the door plate 61, the vertical plate 71 of the partition portion 70, and the auxiliary vertical plate 680. The auxiliary space 670 is located outside the plurality of partition portions 70 in the slide intersecting direction R2 with respect to the mix door 660. The auxiliary space 670 can be partitioned to have the same size as the space 91. Alternatively, the auxiliary space 670 can be partitioned into a size different from that of the space 91 in the slide intersecting direction R2. One of the plurality of guide members 100 is provided at a position corresponding to the auxiliary space 670.

As described above, even when the number of spaces 91 is smaller than the number of partition portions 70 and the number of guide members 100, it is possible to cope with this by adding the auxiliary space 670.

The space 91 and the auxiliary space 670 can be closed by the ventilation restricting portions 292. The ventilation restricting portion 292 has the same configuration as the ventilation restricting portion 292 (see Figs. 5 to 7) in Embodiment 2. In addition, the spaces 91 and the auxiliary spaces 670 can be closed by the ventilation restricting portions 392 (see Fig. 8) in Embodiment 3. In these cases, the warm air guide passages 110 pass over the space 91 and the auxiliary space 670.

On the other hand, when the space 91 and the auxiliary space 670 are not closed by the ventilation restricting portions 292 or the ventilation restricting portion 392 (see Fig. 8), the warm air guide passage 110 can pass through the space 91 or the auxiliary space 670.

In addition to effects in Embodiment 6, the vehicle air conditioner 600 according to Embodiment 6 can achieve the same effects as those of the vehicle air conditioner 200 according to Embodiment 2.

The present invention is not limited to the embodiments but is only defined by the appended claims.

For example, any two or more of the vehicle air conditioners 10 and 200 to 600 according to the embodiments can be combined.

In addition, the sliding mix doors 60, 260, 360, 560, and 660 are not limited to a curved configuration, and may have a configuration conforming to the arrangement or the shape of the warm air outlet 45a and the cold air outlet 46a, and may be, for example, a flat plate shape.

In addition, a shape, a size, the number, or an arrangement pitch of the partition portion 70 forming the cold air introduction path 80 or the guide member 100 forming the warm air guide passage 110 may be appropriately set in consideration of an air volume.

In addition, the guide member 100 may be provided at the position corresponding to the space 91 or the auxiliary space 670 when viewed from the mixing flow path 48 side (arrow R1 direction).

In addition, the guide introduction port 111 of the warm air guide passage 110 may be located away from the outlet 81 (first end 81) of the cold air introduction path 80 so as not to overlap in the slide intersecting direction R2, and a shape, a size, and a position with respect to the warm air outlet 45a of the warm air flow path 45 may be appropriately set.

### [Industrial Applicability]

The vehicle air conditioners 10 and 200 to 600 of the present invention are suitable for being mounted on a vehicle such as a passenger vehicle.

### [Reference Signs List]

10 and 200 to 600: vehicle air conditioner
41: air flow path
42: housing
43: evaporator
44: heater unit
45: warm air flow path
45a: warm air outlet
46: cold air flow path
46a: cold air outlet
47: partition wall
47a: downstream distal end
51: defroster discharge portion
60, 260, 360, 560, and 660: mix door
61: door plate
70: partition portion
80: cold air introduction path
81: outlet (first end) of cold air introduction path
91: space
100: guide member
101: internal space
110: warm air guide passage
111: guide introduction port

## Claims

1. A vehicle air conditioner (10, 200, 300, 400, 500, 600) comprising:
a housing (42) provided with an air flow path (41) inside;
an evaporator (43) provided in the air flow path (41);
a heater unit (44) provided downstream of the evaporator (43);
a partition wall (47) configured to partition the air flow path (41) into a warm air flow path (45) including the heater unit (44) and a cold air flow path (46) bypassing the heater unit (44);
a sliding mix door (60) disposed at a downstream distal end (47a) of the partition wall (47), and configured to adjust a ratio of air flowing toward the warm air flow path (45) to air flowing toward the cold air flow path (46);
at least one cold air introduction path (80) formed in a concave shape recessed from a door plate (61) of the mix door (60) toward a side opposite to the downstream distal end (47a) by at least one partition portion (70) bulging from the door plate (61) toward the side opposite to the downstream distal end (47a), and configured to introduce cold air from a cold air outlet (46a) of the cold air flow path (46) into a warm air outlet (45a) of the warm air flow path (45) when the mix door (60) does not maximize a rate of air flowing toward the warm air flow path (45) and adjusts the rate of the air flowing toward the warm air flow path (45) to be larger than a rate of air flowing toward the cold air flow path (46); and
the vehicle air conditioner being **characterized in that** it comprises at least one warm air guide passage (110) implemented by an internal space (101) of at least one hollow guide member (100), including a guide introduction port (111) located away from an outlet (81) of the cold air introduction path (80), and configured to guide warm air from the warm air outlet (45a) of the warm air flow path (45) to a defroster discharge portion (51).

2. The vehicle air conditioner according to claim 1, wherein
both the number of partition portions (70) and the number of cold air introduction paths (80) are plural,
the plurality of partition portions (70) and the plurality of cold air introduction paths (80) extend from the cold air flow path (46) to the warm air flow path (45), and are disposed in parallel at intervals from each other along the door plate (61), and
the guide member (100) is provided at a position corresponding to a space (91) between the plurality of partition portions (70) when viewed from a mixing flow path (48) side in which air flowing from the cold air flow path (46) and air flowing from the warm air flow path (45) are mixed.

3. The vehicle air conditioner according to claim 2, wherein
the space (91) is closed by a ventilation restricting portion (292, 392) configured to restrict flow of cold air from the cold air flow path (46) to the warm air flow path (45).

4. The vehicle air conditioner according to claim 3, wherein
the ventilation restricting portion (292) protrudes from the door plate (61) toward the mixing flow path (48) side in a range of the space (91), and is formed in a mesh shape when viewed from the mixing flow path (48) side.

5. The vehicle air conditioner according to claim 3, wherein
the ventilation restricting portion (392) is implemented by a member separate from the mix door (60).

6. The vehicle air conditioner according to claim 2, wherein
the warm air guide passage (110) passes through the space (91).

## Patentansprüche

1. Eine Fahrzeugklimaanlage (10, 200, 300, 400, 500, 600), umfassend:
ein Gehäuse (42), das in seinem Inneren mit einem Luftströmungspfad (41) versehen ist;
einen Verdampfer (43), der in dem Luftströmungspfad (41) vorgesehen ist;
eine Heizeinheit (44), die stromabwärts des Verdampfers (43) vorgesehen ist;
eine Trennwand (47), die ausgebildet ist, um den Luftströmungspfad (41) in einen Warmluftströmungspfad (45, der die Heizeinheit (44) einschließt, und einen Kaltluftströmungspfad (46), der die Heizeinheit (44) umgeht, zu unterteilen;
eine verschiebbare Mischklappe (60), die an einem stromabwärtigen distalen Ende (47a) der Trennwand (47) angeordnet und ausgebildet ist, um ein Verhältnis von in Richtung des Warmluftströmungspfads (45) strömender Luft zu in Richtung des Kaltluftströmungspfads (46) strömender Luft einzustellen;
mindestens einen Kaltlufteinleitungspfad (80), der in einer konkaven Form ausgebildet ist, welche von einer Klappenplatte (61) der Mischklappe (60) in Richtung einer dem stromabwärtigen distalen Ende (47a) gegenüberliegenden Seite durch mindestens einen Trennabschnitt (70) zurückspringt, der sich von der Klappenplatte (61) in Richtung der dem stromabwärtigen distalen Ende (47a) gegenüberliegenden Seite vorwölbt, und der ausgebildet ist,
um Kaltluft von einem Kaltluftauslass (46a) des Kaltluftströmungspfads (46) in einen Warmluftauslass (45a) des Warmluftströmungspfads (45) einzuleiten, wenn die Mischklappe (60) eine Rate der in Richtung des Warmluftströmungspfads (45) strömenden Luft nicht maximiert und die Rate der in Richtung des Warmluftströmungspfads (45) strömenden Luft so einstellt, dass sie größer ist als eine Rate der in Richtung des Kaltluftströmungspfads (46) strömenden Luft;
und wobei die Fahrzeugklimaanlage **dadurch gekennzeichnet ist, dass** sie mindestens einen Warmluftführungskanal (110), der durch einen Innenraum (101) mindestens eines hohlen Führungselements (100) realisiert ist, eine Führungseinleitungsöffnung (111) aufweist, die entfernt von einem Auslass (81) des Kaltlufteinleitungspfads (80) angeordnet ist, und ausgebildet ist, um Warmluft von dem Warmluftauslass (45a) des Warmluftströmungspfads (45) zu einem Defroster-Auslassabschnitt (51) zu führen.

2. Fahrzeugklimaanlage nach Anspruch 1, wobei sowohl die Anzahl der Trennabschnitte (70) als auch die Anzahl der Kaltlufteinleitungspfade (80) eine Mehrzahl ist, die Mehrzahl von Trennabschnitten (70) und die Mehrzahl von Kaltlufteinleitungspfaden (80) sich von dem Kaltluftströmungspfad (46) zu dem Warmluftströmungspfad (45) erstrecken und parallel zueinander beabstandet entlang der Klappenplatte (61) angeordnet sind, und das Führungselement (100) an einer Position bereitgestellt ist, die einem Raum (91) zwischen der Mehrzahl von Trennabschnitten (70) entspricht, bei Betrachtung von einer Seite eines Mischströmungspfads (48), in dem aus dem Kaltluftströmungspfad (46) strömende Luft und aus dem Warmluftströmungspfad (45) strömende Luft gemischt werden.

3. Fahrzeugklimaanlage nach Anspruch 2, wobei der Raum (91) durch einen Belüftungsbegrenzungsabschnitt (292, 392) verschlossen ist, der ausgebildet ist, um ein Strömen von Kaltluft aus dem Kaltluftströmungspfad (46) in den Warmluftströmungspfad (45) zu begrenzen.

4. Fahrzeugklimaanlage nach Anspruch 3, wobei der Belüftungsbegrenzungsabschnitt (292) von der Klappenplatte (61) in Richtung der Seite des Mischströmungspfads (48) in einem Bereich des Raums (91) vorsteht und bei Betrachtung von der Seite des Mischströmungspfads (48) in einer Gitterform ausgebildet ist.

5. Fahrzeugklimaanlage nach Anspruch 3, wobei der Belüftungsbegrenzungsabschnitt (392) durch ein von der Mischklappe (60) separates Element realisiert ist.

6. Fahrzeugklimaanlage nach Anspruch 2, wobei der Warmluftführungskanal (110) durch den Raum (91) verläuft.

## Revendications

1. Climatiseur de véhicule (10, 200, 300, 400, 500, 600) comprenant :
un boîtier (42) muni d'un passage d'écoulement d'air (41) à l'intérieur ;
un évaporateur (43) disposé dans le passage d'écoulement d'air (41) ;
une unité de chauffage (44) disposée en aval de l'évaporateur (43) ;
une paroi de séparation (47) configurée pour diviser le passage d'écoulement d'air (41) en un passage d'écoulement d'air chaud (45) comprenant l'unité de chauffage (44) et un passage d'écoulement d'air froid (46) contournant l'unité de chauffage (44) ;
un volet de mélange coulissant (60) disposé à une extrémité distale aval (47a) de la paroi de séparation (47), et configuré pour ajuster le rapport entre l'air s'écoulant vers le passage d'écoulement d'air chaud (45) et l'air s'écoulant vers le passage d'écoulement d'air froid (46) ; au moins un passage d'introduction d'air froid (80) formé en une forme concave en retrait d'une plaque de volet (61) du volet de mélange (60) vers un côté opposé à l'extrémité distale aval (47a) par au moins une partie de cloison (70) faisant saillie de la plaque de volet (61) vers le côté opposé à l'extrémité distale aval (47a),
et configuré pour introduire de l'air froid depuis une sortie d'air froid (46a) du passage d'écoulement d'air froid (46) dans une sortie d'air chaud (45a) du passage d'écoulement d'air chaud (45) lorsque le volet de mélange (60) ne maximise pas un débit d'air s'écoulant vers le passage d'écoulement d'air chaud (45) et ajuste le débit de l'air s'écoulant vers le passage d'écoulement d'air chaud
(45) de manière à ce qu'il soit supérieur au débit d'air s'écoulant vers le circuit d'air froid (46) ; et le climatiseur de véhicule étant **caractérisé en ce qu'**il comprend
au moins un passage de guidage d'air chaud (110) formé par un espace interne (101) d'au moins un élément de guidage creux (100), comprenant un orifice d'introduction de guidage (111) situé à distance d'une sortie (81) du passage d'introduction d'air froid (80),
et configuré pour guider l'air chaud depuis la sortie d'air chaud (45a) du passage d'écoulement d'air chaud (45) vers une partie de sortie de dégivrage (51).

2. Le climatiseur de véhicule selon la revendication 1, dans lequel
le nombre de parties de cloison (70) et le nombre de passages d'introduction d'air froid (80) sont tous deux multiples,
la pluralité de parties de cloison (70) et la pluralité de passages d'introduction d'air froid (80) s'étendent du passage d'écoulement d'air froid (46) vers le passage d'écoulement d'air chaud (45), et sont disposées en parallèle à intervalles les uns des autres le long de la plaque de volet (61), et
l'élément de guidage (100) est prévu à une position correspondant à un espace (91) entre la pluralité de parties de cloison (70) lorsqu'on regarde depuis le côté du passage d'écoulement de mélange (48) dans lequel l'air s'écoulant depuis le passage d'écoulement d'air froid (46) et l'air s'écoulant depuis le passage d'écoulement d'air chaud (45) sont mélangés.

3. Le climatiseur de véhicule selon la revendication 2, dans lequel
l'espace (91) est fermé par une partie de restriction de ventilation (292, 392) configurée pour restreindre l'écoulement d'air froid du passage d'écoulement d'air froid (46) vers le passage d'écoulement d'air chaud (45).

4. Le système de climatisation pour véhicule selon la revendication 3, dans lequel
la partie de restriction de ventilation (292) fait saillie depuis la plaque de volet (61) vers le côté du passage d'écoulement de mélange (48) dans une partie de l'espace (91), et est formée en forme de maillage lorsqu'on la regarde depuis le côté du passage d'écoulement de mélange (48).

5. Le système de climatisation pour véhicule selon la revendication 3, dans lequel
la partie de restriction de ventilation (392) est mise en œuvre par un élément distinct du volet de mélange (60).

6. Le système de climatisation pour véhicule selon la revendication 2, dans lequel
le passage de guidage d'air chaud (110) traverse l'espace (91).
